# EUROPEAN PATENT SPECIFICATION

(11) **EP 0 322 841 B1**
(45) Date of publication and mention of the grant of the patent: **05.05.1993**
(21) Application number: 88121684.0
(22) Date of filing: 27.12.1988
(51) Int. Cl.: G11B 7/095, G11B 7/085

(54) **Optical disk apparatus**
Optisches Plattengerät
Appareil de disque optique

(30) Priority: 28.12.1987 JP 330079/87
(43) Date of publication of application: 05.07.1989
(73) Proprietor: KABUSHIKI KAISHA TOSHIBA, Kawasaki-shi, Kanagawa-ken 210 (JP)
(72) Inventor: Ikeda, Hidetoshi c/o Patent Division, Minato-ku Tokyo 105 (JP)
(74) Representative: Henkel, Feiler, Hänzel & Partner

(56) References cited:
- EP-A- 0 098 076
- EP-A- 0 177 737
- DE-A- 3 608 269
- FR-A- 2 505 074
- FR-A- 2 509 505
- GB-A- 2 029 051

## Description

The present invention generally relates to an optical disk apparatus, and, more particularly, to an optical disk apparatus which rotates a memory disk relative to an optical head so as to optically record data on, or reproduce data from, the memory disk.

In the optical head arranged closed to one surface of the rotating optical disk, a laser beam generated by a semiconductor laser is converged on the optical disk by an objective lens for data recording or data reproduction. The optical head is subjected to tracking control so that the converged laser beam follows the tracks on the optical disk, or it is subjected to focus control so that the laser beam is focused on a target track on the optical disk by the objective lens.

The optical disk apparatus comprises a linear motor for moving the optical head in the radial direction of an optical disk in coarse access mode and an objective lens moving mechanism for driving the objective lens in fine access mode, as described in US-A-4,037,252.

In accessing a desired or target track on an optical disk with a focused laser beam, first, the linear motor is operated in coarse access mode to move the optical head for coarse accessing to the target track. Then, the track position on the optical disk is read out by the laser beam, and, if the difference between the read track and the target track is small and within an allowable range, the mode is changed to the fine access mode from the coarse access mode. In fine access mode, the objective lens is moved to finely access the track. If the mentioned difference between the read and target tracks is large, the coarse access mode is maintained and the linear motor is again driven in this mode for coarse track accessing.

In coarse access mode, an optical scale provided at the optical head is read by a position detector so that the position and displacement of the scale are measured.

The irradiation position of the laser beam converged on the optical disk depends on the position of the optical head moved by the linear motor and the position of the objective lens provided in the optical head. Even if the linear motor is accurately moved over the distance to the target track in coarse access mode, however, the reaction of the acceleration or deceleration of the linear motor would move the objective lens in the optical head to significantly deviate the lens from where it was before the accessing action. This reduces the accessing accuracy and makes a high-speed access difficult.

In other words, the objective lens is generally provided at one end of a wire suspension secured at the other end to a fixed section and is movably suspended. Therefore, the acceleration or deceleration force of the linear motor is likely to swing the objective lens. If the tracking control starts before the swinging of the lens stops in order to realize high-speed accessing, therefore, the position of the objective lens after the coarse accessing carried out by the linear motor would be significantly deviated from the position of the lens before this accessing action.

As a result, in coarse access mode, the swinging of the objective lens reduces the access accuracy and cannot ensure stable tracking, thus requiring a longer accessing time.

Prior art document EP-A-0 177 737 discloses an optical memory disk apparatus in which an opticle head comprises an objective lens to radiate a laser beam onto a disk which includes tracks spaced from each other in a radial direction of the disk. The laser beam reflected from the disk travels back through the objective lens, and is reflected toward a photo-detector device which produces a detection signal dependent on the pits recorded on the disk. The optical head is supported on an arm of a linear motor and movable thereby in the radial direction of the disk, i.e. in a direction perpendicular to the axis of the light beam. A head position sensor may comprise a linear encoder and has such accuracy as to be able to detect about half of the radial width of one data track group. Finally, a table is provided for storing eccentricity values for eccentricity correction during a fine track seek mode.

Prior art document FR-A-2 509 505 describes an optical disk apparatus which handles an optical disk on which a track is formed spirally or coaxially on the surface of the disk. Eccentricity correction data from a reference position mark on the disk to the same reference position mark after one rotation of the disk is stored in a memory. While recording or reproducing information on/from the disk, an optical head is moved in accordance with the stored correction data, and the position on which the beam light is irradiated through a lens is changed based on the eccentricity degree which still remains uncorrected after moving the optical head.

Finally, earlier European patent application 83 121 683.2 (EP-A1-0 322 840) discloses an optical disk apparatus in which data indicating the position at which an objective lens is located immediately before the accessing in the rough access mode is stored, and the position indicating by the stored data is compared with the actual position of the objective lens during the execution of accessing. The objective lens is moved in accordance with the difference between the actual position and the position indicated by the stored data, thereby holding the objective lens at the position immediately before the start of accessing. Since the movement of the objective lens is controlled in the manner mentioned above, the swinging movement of the objective lens is suppressed when the accessing is being performed in the rough access mode, and the accessing accuracy of the rough access mode can be improved. Further, a stable tracking is ensured since the objective lens can be held substantially in the center of the range in which the objective lens is movable in the tracking direction. Still further, the accessing time can be shortened. However, this earlier application does not teach anything relating especially to an eccentricity compensation.

It is an object of this invention to provide an optical disk apparatus which can suppress the swinging of the objective lens in coarse access mode to improve the accessing accuracy in this mode in consideration of eccentric compensation, can ensure stable tracking at the proper position for higher accessing accuracy, and shorten the required access time.

To solve this object the present invention provides an optical disk apparatus as specified in claim 1.

This invention can be more fully understood from the following detailed description when taken in conjunction with the accompanying drawings, in which:
Fig. 1 is a block diagram schematically illustrating an optical disk apparatus;
Fig. 2 is a diagram illustrating an essential section for suppressing the swinging of an objective lens in rough access mode;
Fig. 3 is a schematic plan view illustrating the structure of an optical head shown in Fig. 1;
Fig. 4 is a graph illustrating the relation between the position of the objective lens and the detection output of a position detector both shown in Fig. 1;
Fig. 5 is a flowchart for explaining the operation of the optical disk apparatus shown in Fig. 1;
Fig. 6 is a schematic block diagram illustrating an optical disk apparatus according to an embodiment of this invention;
Fig. 7 is a diagram illustrating an essential section for suppressing the swinging of an objective lens in rough access mode according to the embodiment;
Fig. 8 is a diagram illustrating the amount of deviation for each sector on an optical disk shown in Fig. 6;
Fig. 9 is a diagram illustrating an eccentric compensation table stored in a memory shown in Fig. 6; and
Fig. 10 is a flowchart for explaining the operation of the optical disk apparatus shown in Fig. 6.

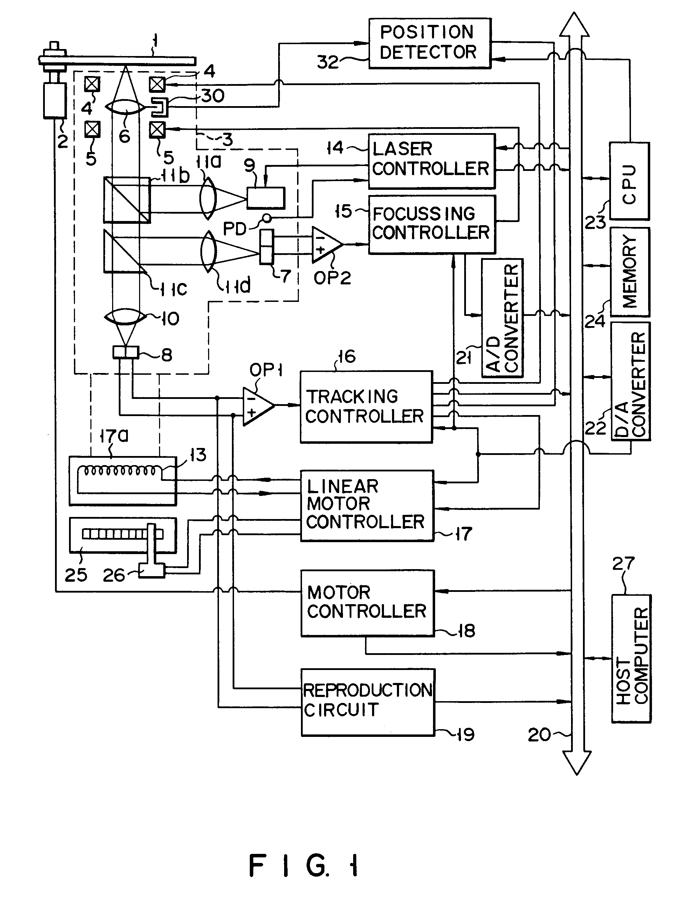

An optical disk 1 shown in Fig. 1 has grooves (tracks) formed concentrically on its surface, and this disk 1 is rotated at, for example, a constant speed by a motor 2 that is controlled by a motor controller 18.

Optical disk 1 comprises a disk-shaped substrate of, for example, glass or plastic, and a recording layer, which is coated on the substrate.

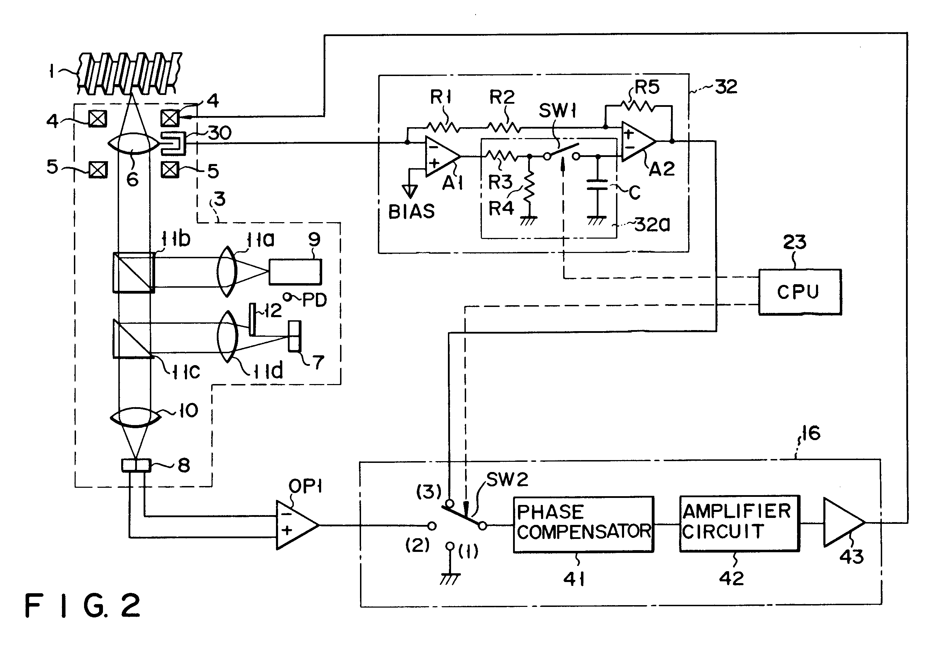

Close under optical disk 1 is disposed an optical head 3. As disclosed in US-A-4,684,797, this optical head 3 comprises, as shown in Fig. 2, an objective lens 6, drive coils 4 and 5 for driving the objective lens 6, a pair of focus sensors 7, a pair of track sensors 8, a semiconductor laser 9, a focusing lens 10, a collimator lens 11a, half prisms 11b and 11c, a knife edge 12 and a photosensor PD. (See US-A-4,684,797 for the detail description of the optical system.)

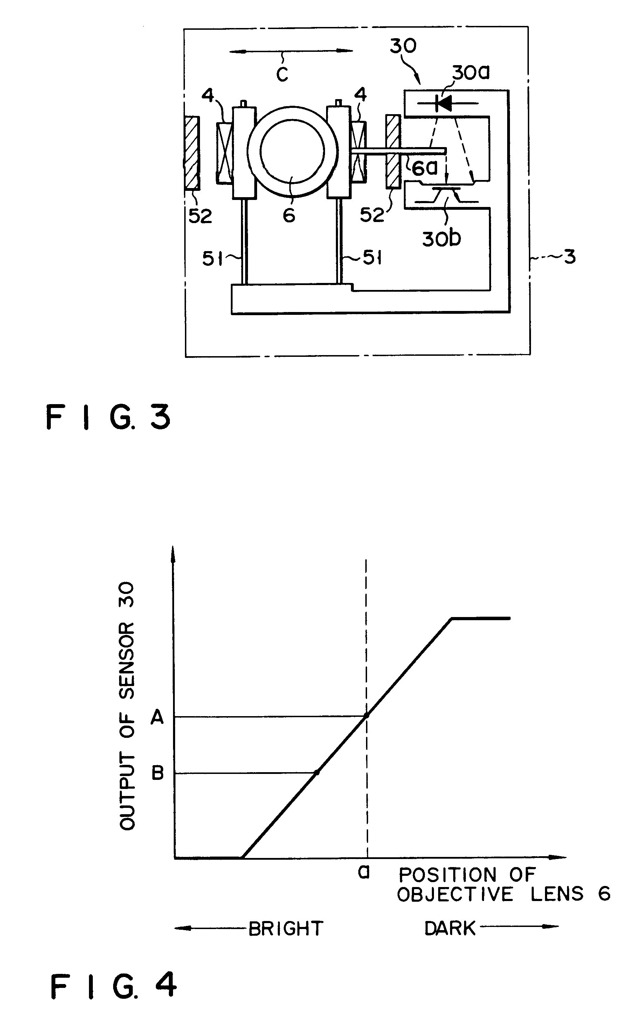

Objective lens 6 is suspended from a fixed section (not shown) by wire suspensions 51 as shown in Figs. 2 and 3. This objective lens 6, when driven by drive coil 5, is movable in the focusing direction (i.e., in the direction of the optical axis of the lens), and it is movable in the tracking direction (perpendicular to the optical axis of the lens) when driven by drive coil 4.

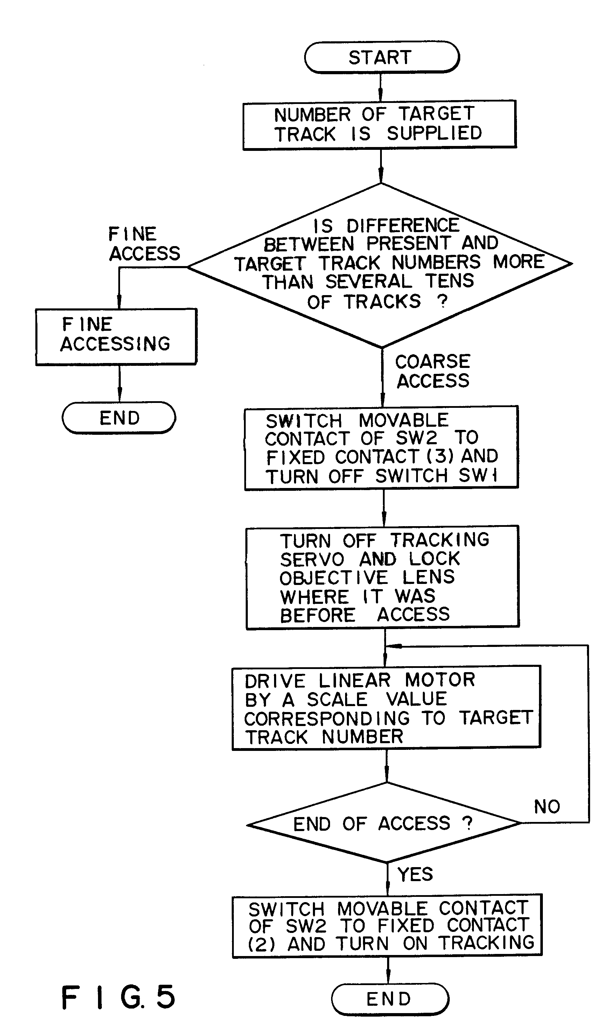

Objective lens 6 is moved in the directions of the arrow C in Fig. 5, i.e., in the directions perpendicular to the optical axis of objective lens 6, by the mutual action of drive coils 4 and permanent magnets provided at fixed sections.

On a side section of objective lens 6 is provided a light-shielding plate 6a that moves with this lens 6. A sensor 30 is secured to the main body of optical head 3 at a position facing light-shielding plate 6a. This sensor 30 is a photointerrupter type, which is constituted by an LED (light emitting diode) 30a for generate a light beam and a phototransistor 30b for sensing the light beam or a part of the light beam.

Sensor 30 generates an electrical detection signal corresponding to the position of light-shielding plate 6a and the position signal is supplied to a position detector 32. For instance, when objective lens 6 is located in the middle of permanent magnets 52, a half of light beam from LED 30a is shielded by light-shielding plate 6a, and phototransistor 30b outputs an electric signal of a middle level as a consequence. In this manner, phototransistor 30b outputs an electric signal of a level that corresponds to the moved position of objective lens 6.

Referring to Fig. 2, the arrangement of position detector 32 will be described below.

A detection signal from sensor 30 is supplied a current-voltage converter A1 which converts the current signal into a corresponding voltage signal. This voltage signal is supplied to an RC filter 32a. The output of current-voltage converter A1 is fed back to the inverting input terminal thereof through a resistor R1 and is also supplied to a non-inverting input terminal of a differential amplifier A2 through a resistor R2.

RC filter 32a has resistors R3 and R4, a capacitor C and a change-over switch SW1 located between resistor R4 and capacitor C. This change-over switch SW1 is rendered ON or OFF by a change-over signal from CPU 23; during the ON duration of switch SW1, a voltage signal from current-voltage converter A1 is accumulated in capacitor C, whereas during the OFF duration, a voltage signal immediately before the switch SW1 is rendered OFF is accumulated in capacitor C.

The time constant of RC filter 32a is set sufficiently smaller than the response time for objective lens 6. The output of RC filter 32a is supplied to an inverting input terminal of differential amplifier A2 which outputs a voltage signal corresponding to the difference between the output of differential amplifier A1 and the output of RC filter 32a.

The output of differential amplifier A2 is supplied to tracking controller 16 as well as fed back to the non-inverting input terminal of differential amplifier A2 through a resistor R5. The aforementioned resistors R1 to R5 have the same resistance.

During the ON duration of change-over switch SW1, differential amplifier A2 has an output signal of level "0" irrespective of the moved position of objective lens 6. The output of current-voltage converter A1 is supplied to capacitor 3 through change-over switch SW1 and resistor R3. Accordingly, the voltage signal corresponding to the moved position of objective lens 6 is accumulated in capacitor C. During the OFF duration, the output of current-voltage converter A1 is supplied to the inverting input terminal of differential amplifier A2 through resistor R2. At this time, the voltage signal acquired before the OFF state of change-over switch SW1 is accumulated in capacitor C and this voltage signal is supplied to the non-inverting input terminal of differential amplifier A2.

Accordingly, when objective lens 6 is located at the same position as it was before the switching operation of change-over switch SW1, the output of level "0" is output from differential amplifier A2. When objective lens 6 is moved from where it was before the switching operation of change-over switch SW1, differential amplifier A2 outputs a position deviation signal corresponding to the amount of displacement of objective lens 6.

Fig. 4 illustrates the sensing characteristic of sensor 30, which represents the detection outputs of sensor 30 with respect to different positions of objective lens 6. When objective lens 6 is located at the center position a, the detection output of sensor 30 is A. An offset voltage may be added to the detection output of sensor 30 with respect to the center position of objective lens 6 due to reduction in output of sensor 30 with age, a change in the ambient temperature, or the like, thereby changing the detection output to B. Even in this case, the position deviation signal properly reflects this change to B. Even if an offset voltage is added to the detection output of sensor 30, therefore, the detected content of position detector 32 would not vary and require no adjustment of this offset.

This optical head 3 is secured to a drive coil 13, which constitutes the movable section of a linear motor 17a, and this drive coil 13 is coupled to a linear motor controller 17. This linear motor controller 17 is coupled with a linear motor position detector 26, which detects an optical scale 25 provided in optical head 3 and produces a position signal.

The fixed section of the linear motor 17a is provided with a permanent magnet (not shown). Drive coil 13 is excited by linear motor controller 17 so that optical head 3 can move in the radial direction of optical disk 1 with the movement of linear motor 17a.

A laser beam generated by semiconductor laser 9, which is driven by a laser controller 14, is irradiated on optical disk 1 through collimator lens 11a, half prism 11b and objective lens 6. Reflection light from the disk's surface is led to half prism 11c through objective lens 6 and half prism 11b.

One of the beam components split by half prism 11c is led through convergent lens 10 to a pair of track sensors 8. The other beam component is led to the aforementioned focus sensors 7 through convergent lens 11d and knife edge 12.

The output signals of the track sensors 8 are supplied to a differential amplifier OP1 to be converted into a tracking error signal, which is then supplied to a tracking controller 16. This tracking controller 16 sends out the tracking error signal from differential amplifier OP1 to linear motor controller 17 as well as to drive coil 4. The tracking error signal is also supplied to drive coils 4 for head movement in the tracking direction.

Referring now to Fig. 2, a description will be given of the arrangement of tracking controller 16.

The tracking error signal from differential amplifier OP1 or the position signal from position detector 32 is supplied to a change-over switch SW2. This change-over switch SW2 is switched by a change-over signal from CPU 23 to have its movable contact coupled to either a fixed contact (1), (2) or (3). When change-over switch SW2 has its movable contact coupled to fixed contact (1), nothing is output from this switch SW2; when the movable contact is coupled to fixed contact (2), the tracking error signal from differential amplifier OP1 is output; and when the movable contact is coupled to fixed contact (3), the position signal from position detector 32 is output. The output of change-over switch SW2 is supplied to a phase compensator 41, which compensates the phase of the received tracking error signal or position signal and outputs the resultant signal to an amplifier circuit 42. Amplifier circuit 42 amplifies the received signal and outputs it to a driver 43, which drives the drive coil 4 in accordance with the received amplified signal.

Tracking controller 16 connects the movable contact of change-over switch SW2 to its fixed contact (2) in accordance with the change-over signal from CPU 23. The tracking error signal from differential amplifier OP1 is supplied to driver 43 through change-over switch SW2, phase compensator 41 and amplifier circuit 42. This driver 43 drives coil 4 to perform tracking control.

Tracking controller 16 also connects the movable contact of change-over switch SW2 to its fixed contact (3) in accordance with the change-over signal from CPU 23. The position signal from position detector 32 is supplied to driver 43 through change-over switch SW2, phase compensator 41 and amplifier circuit 42. Driver 43 drives coil 4 so that objective lens 6 can be held at a predetermined position.

Focus sensors 7 generates detected signals associated with a focusing state of objective lens 6, which are supplied through differential amplifier OP2 to a focusing controller 15. The output signal of this focusing controller 15 is supplied to drive coil 5, so that the position of objective lens 6 is controlled to permit the laser beam to be always on focus on optical disk 1.

A sum signai of the outputs of track sensors 8 in focusing and tracking states represents recorded information data formed as pits on tracks. This sum signal is supplied to a reproduction signal 19 which reproduces image data and address data (track number, etc.).

The aforementioned laser controller 14, focusing controller 15, tracking controller 16, linear motor controller 17, motor controller 18 and reproduction circuit 19 are all coupled through a bus line 20 to a CPU 23 and controlled by the CPU 23. This CPU 23 performs its operation based on a program stored in a memory 24. A target track number or recorded data is transferred onto bus line 20, which is further coupled with a host computer 27 that receives a video signal reproduced from reproduction circuit 19.

An A/D converter 21 is provided to permit data exchange between focusing controller 15 and CPU 23, and a D/A converter 22 is provided to permit data exchange among focusing controller 15, tracking controller 16, linear motor controller 17 and CPU 23.

Referring now to the flowchart shown in Fig. 5, a description will be given of the tracking operation of the above arrangement in coarse access mode. Assume that the movable contact of change-over switch SW2 in tracking controller 16 is coupled to the fixed contact (2) in response to the change-over signal from CPU 23 at the time of data reproduction or recording prior to track accessing.

Then, the tracking error signal from differential amplifier OP1 is supplied to driver 4 through change-over switch SW2, phase compensator 41 and amplifier circuit 42. This driver 43 drives coil 4 in accordance with the tracking error signal for tracking control.

During such tracking control, the number of a target track to be accessed is supplied to CPU 23 from an external unit (not shown). CPU 23 compares the present track number with the target track number, and selects the coarse access mode when the difference between these track numbers indicates more than several tens of tracks.

When the coarse access mode is selected, CPU 23 sends out a scale value corresponding to the target track number to linear motor controller 17 through D/A converter 22. As a result, linear motor controller 17 permits an excitation current to be applied to drive coil 13 in accordance with the scale value. The movement of linear motor 17a causes optical head 3 to move to the position corresponding to the scale value for coarse track accessing.

When optical head 3 starts moving, CPU 23 switches the movable contact of change-over switch SW2 in tracking controller 16 to the fixed contact (3) to stop the tracking. At the same time, CPU 23 renders change-over switch SW1 OFF. Consequently, in accordance with the detection signal from sensor 30, the voltage value of a signal corresponding to the position of objective lens 6 immediately before the track access is executed in coarse access mode is held (accumulated) in capacitor C of position detector 32. Accordingly, the positional locking of objective lens 6 is controlled.

That is, the movable contact of change-over switch SW2 is coupled to the fixed contact (3) by the change-over signal from CPU 23. Consequently, position detector 32 sends out, to tracking controller 16, a deviation signal that represents the difference between the voltage value of the detection signal from sensor 30 and the voltage value accumulated in capacitor C. In accordance with the deviation signal from position detector 32, tracking controller 16 causes driver 43 to drive coil 4 so that objective lens 6 is held at the position where the lens was before the track access in coarse access mode.

When optical head 3 stops moving, or when the track access in coarse access mode is completed, CPU 23 connects the movable contact of change-over switch SW2 to the fixed contact (2). As a result, the tracking error signal from differential amplifier OP1 is supplied to driver 43 through change-over switch SW2, phase compensator 41 and amplifier circuit 42. The driver 43 drives coil 4 in accordance with the tracking error signal to execute tracking control. At this time, change-over switch SW1 is rendered OFF.

Accordingly, even if objective lens 6 suspended by wire suspensions 51 swings due to the reaction of head movement while optical head 3 is moving in coarse access mode, i.e., during acceleration, a low-speed movement or deceleration of optical head 3, objective lens can be held at the position where it was before the track access in coarse access mode.

As described above, the position of objective lens 6 before the track access executed in coarse access mode, is memorized, and during access, the memorized position is compared with the present position of objective lens 6 and the lens 6 is moved in accordance with the difference between two positions to thereby hold objective lens 6 where it was before the track access. Therefore, objective lens 6 does not deviate from the position where it was before the track access.

Accordingly, the swinging of objective lens 6 in coarse access mode can be suppressed, the accuracy in coarse accessing can be improved as a consequence, and the position of objective lens 6 relative to optical head 3 comes to a stable position or at the center between permanent magnets 51, thereby providing stable tracking. In addition, the access time can be shortened.

Tracks on optical disk 1 should ideally form a true circle, but some portions of tracks may be deformed due to radial-directional stretching or compression of optical disk 1. In other words, eccentricity is caused. The amount of eccentricity intrinsic to optical disk 1 is memorized in advance, and objective lens 6 is moved in accordance with the stored eccentricity amount, so that objective lens 6 permits the laser beam to follow a specific track. This following action of the laser beam is eccentric compensation.

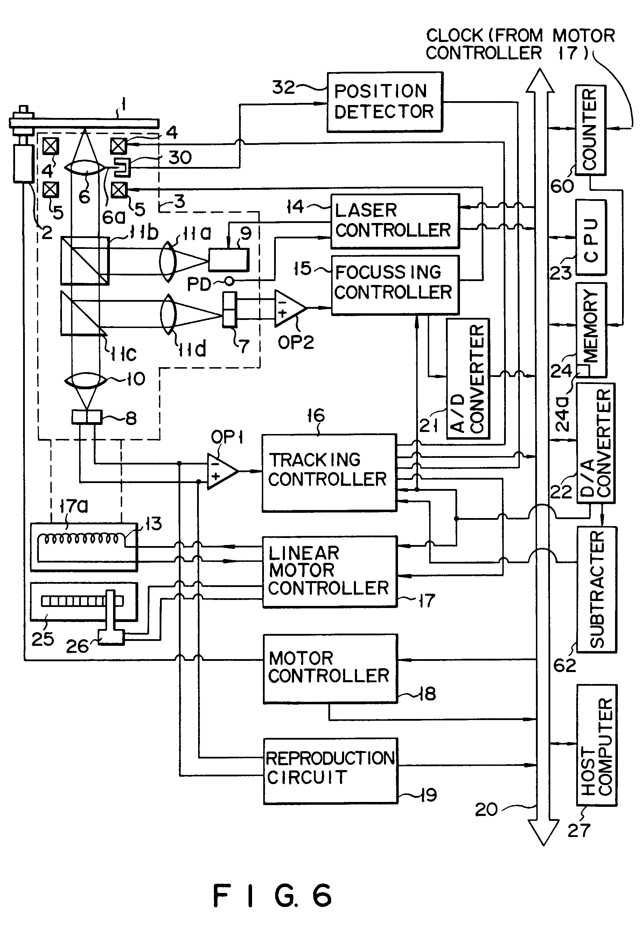

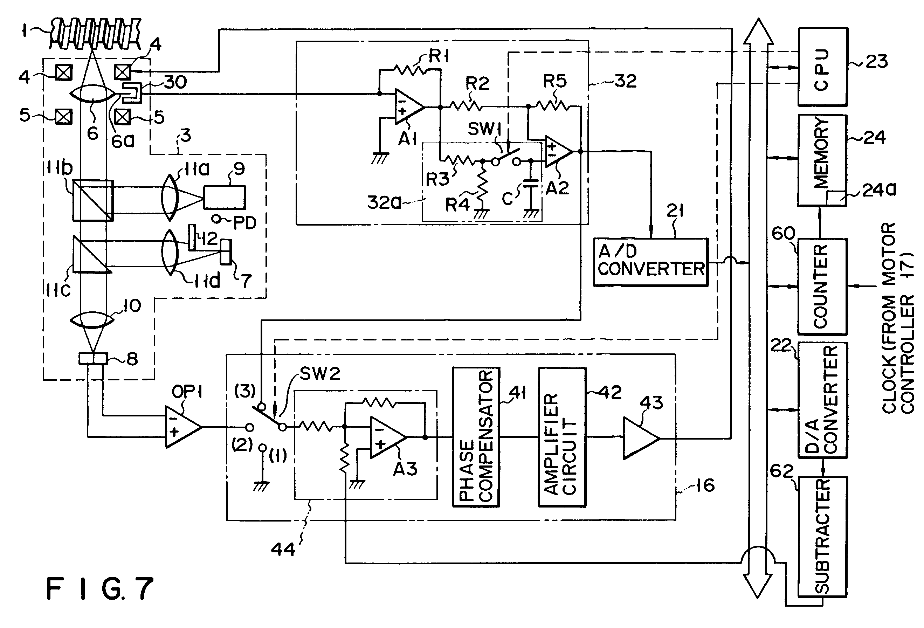

Referring now to Figs. 6 through 10, a description will be given of an embodiment which reflects this eccentric compensation. A description of those sections of this embodiment which are identical with or correspond to the above-described sections of the first apparatus shown in Figs. 1 through 4, will be omitted.

The output of position detector 32 or the output of differential amplifier A2 is supplied to tracking controller 16 as well as to A/D converter 21.

Tracking controller 16 has an adder 44 provided between change-over switch SW2 and phase compensator 41 to add the tracking error signal from change-over switch SW2 and an eccentric compensation signal from D/A converter 22. This adder 44 is constituted by resistors R6 and R7 and a differential amplifier A3.

A counter 60 is a cycle counter for counting divided signals of a reference clock supplied to motor controller 18. Optical disk 1 has a predetermined sectors, i.e., 256 sectors which are counted by counter 60 during a predetermined period, i.e., one rotation of optical disk 1. Counter 60 counts zero when laser beam is focused on a point on optical disk 1, which can be arbitrarily preset.

A memory 24 is provided with an eccentric compensation table 24a which has eccentric compensation data stored at a memory address corresponding to the count value of counter 60.

Eccentric compensation data of the memory address corresponding to an output value of the cycle counter is set as a subtraction value in a subtracter 62 in coarse access mode, and every time the value of the cycle counter varies to a new one, the subtraction value is subtracted from the eccentric compensation data and the resultant value is output as eccentric compensation data.

A description will be given below of how to register eccentric compensation data in eccentric compensation table 24a. First, optical disk 1 is loaded in the optical disk apparatus and is drive at a given speed by motor 2. Then, optical head 3 is positioned at the innermost track. At this time, the movable contact of change-over switch SW2 in tracking controller 16 is coupled to the fixed contact (2) by the change-over signal from CPU 23. Accordingly, the tracking error signal from differential amplifier OP1 is supplied to driver 43 through change-over switch SW2, adder 44, phase compensator 41 and amplifier circuit 42. Driver 43 drives coil 4 in accordance with the tracking error signal to thereby perform tracking control.

At this time, current-voltage converter A1 in position detector 32 has converted the detection signal from sensor 30 into a corresponding voltage signal and this voltage signal has been accumulated in capacitor C.

Under such a tracking condition, CPU 23 starts the registering of eccentric compensation data. Assuming that the movable contact of change-over switch SW2 in tracking controller 16 is kept coupled to the fixed contact (2) by CPU 23, then the tracking remains ON.

Then, CPU 23 renders change-over switch SW1 OFF. As a result, in accordance with the detection signal from sensor 30, the voltage value of a signal corresponding to the position of objective lens 6 immediately before change-over switch SW1 has been rendered OFF is held (accumulated) in capacitor C.

At this time, position detector 32 sends out, to A/D converter 21, a deviation signal representing the difference between the voltage value of the detection signal from sensor 30 and the voltage value accumulated in capacitor C and a deviation signal is converted into deviation digital data by A/D converter 21.

When the count value of counter 60 is any value "n", the deviation data from A/D converter 21 is stored in a memory address which represents a sum of the base address and offset address "n" indicated by counter 60.

Thereafter, data acquired every time the count value of counter 60 is up-counted is stored in eccentric compensation table 24a for a time corresponding to each revolution of optical disk 1.

Averaged data of the data acquired every time the count value of counter 60 is up-counted with respect to one revolution of optical disk 1 and the previously stored data is stored in eccentric compensation table 24a.

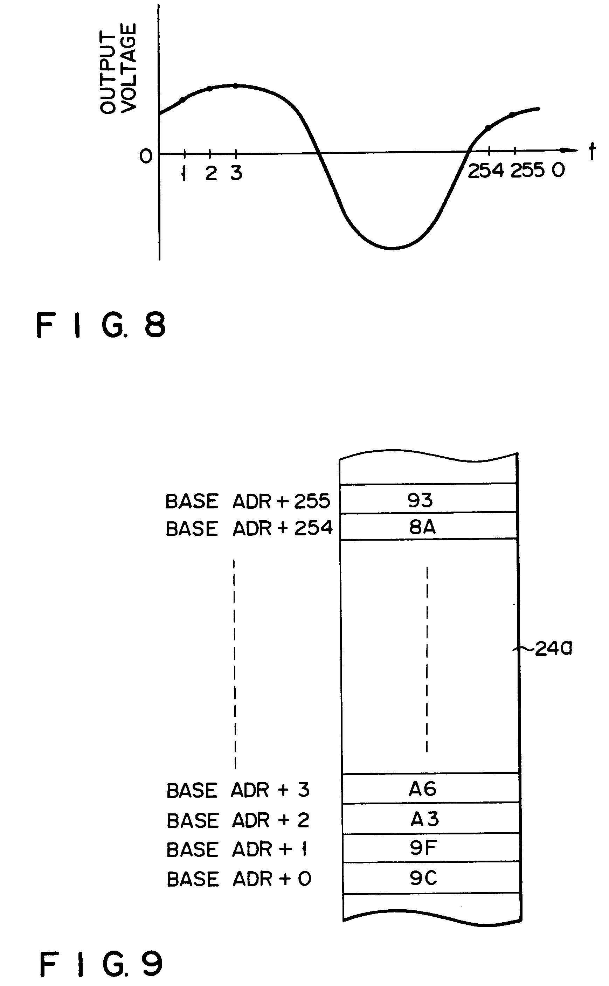

Consequently, digital values (see Fig. 8) corresponding to deviation signals from position detector 32 for the individual sectors are stored in eccentric compensation table 24a of memory 24. In other words, digital data of the deviation signal produced from position detector 32 while executing tracking control is stored as eccentric compensation data in eccentric compensation table 24a.

In this embodiment, although two revolutions of optical disk 1 are taken as an eccentric sampling period, the eccentric sampling period may be three revolution or more of disk 1.

Further, optical disk 1 may be divided into a plurality of areas in the radial direction, each track consisting of a plurality of tracks, so that eccentric compensation data can be attained for each area.

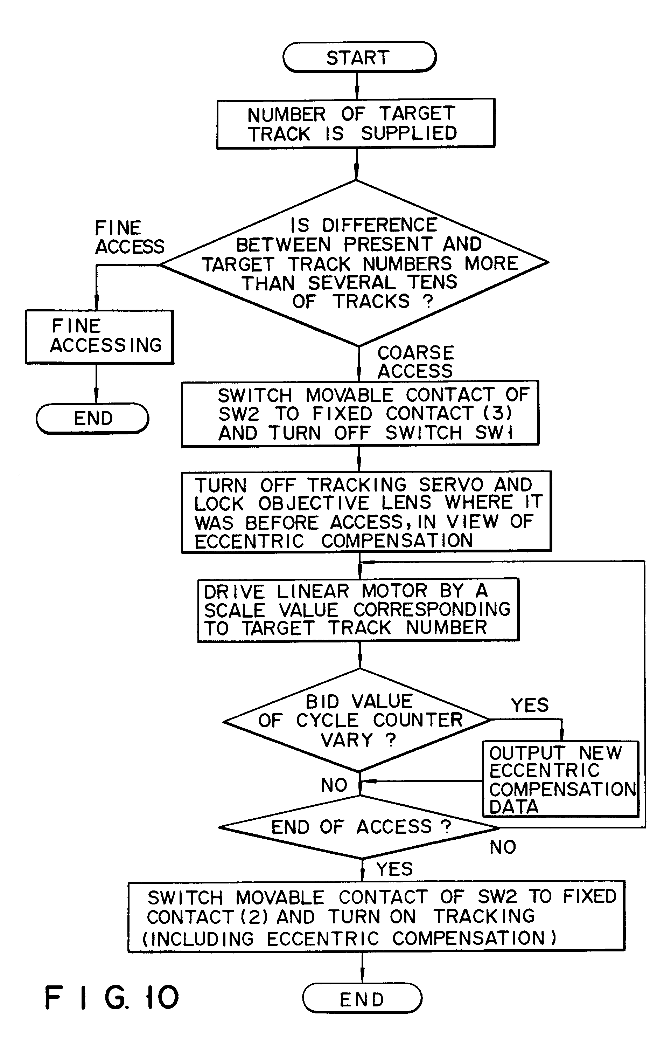

Referring now to the flowchart of Fig. 10, a description will be given about the coarse access in mode with the above arrangement.

CPU 23 sends out a scale value corresponding to the target track number to linear motor controller 17 through D/A converter 22. As a result, linear motor controller 17 permits an excitation current to be applied to drive coil 13 in accordance with the scale value. The movement of linear motor 17a causes optical head 3 to move to the position corresponding to the scale value for coarse track accessing.

When optical head 3 starts moving, CPU 23 reads out eccentric compensation data from memory 24 at the memory address corresponding to the count value of counter 60 at that time and this eccentric compensation data is set as a subtraction value in subtracter 62.

Then, CPU 23 switches the movable contact of change-over switch SW2 in tracking controller 16 to the fixed contact (3) to stop the tracking. At the same time, CPU 23 renders change-over switch SW1 OFF. Consequently, in accordance with the detection signal from sensor 30, the voltage value of a signal corresponding to the position of objective lens 6 immediately before the track access is executed in coarse access mode is held (accumulated) in capacitor C of position detector 32. Accordingly, objective lens 6 is held at where it was before the track access, in view of the eccentric compensation.

That is, the movable contact of change-over switch SW2 is coupled to the fixed contact (3) by the change-over signal from CPU 23. Consequently, position detector 32 sends out, to tracking controller 16, a deviation signal that represents the difference between the voltage value of the detection signal from sensor 30 and the voltage value accumulated in capacitor C. In accordance with the deviation signal from position detector 32, tracking controller 16 causes driver 43 to drive coil 4 so that objective lens 6 is held at the position where the lens was before the track access in coarse access mode.

When a clock pulse is supplied to counter 60 and the count value is changed as a consequence, CPU 23 sequentially reads out eccentric compensation data from eccentric compensation table 24a in memory 24 at the memory address corresponding to the count value and sends the data to subtracter 62. Subtracter 62 subtracts the subtraction value set therein in advance from the received eccentric compensation data.

The subtraction result from subtracter 62 is converted into analog data in D/A converter and is then supplied to adder 44 in tracking controller 16. Adder 44 in turn adds the tracking error signal and the eccentric compensation signal and sends the resultant signal to driver 43 through phase compensator 41 and amplifier circuit 42. Driver 43 then drives coil 4 in accordance with the tracking error signal and eccentric compensation signal. That is, tracking controller 16 causes driver 43 to drive coil 4 in accordance with the result of adding the deviation signal from position detector 32 and the eccentric compensation data from D/A converter 22, and the eccentric compensation is started from a position immediately preceding a position where objective lens 6 makes access in the coarse access mode.

When optical head 3 stops moving, or when the track access in coarse access mode is completed, CPU 23 connects the movable contact of change-over switch SW2 to the fixed contact (2). The driver 43 drives coil 4 in accordance with the tracking error signal to execute tracking control.

Accordingly, even if objective lens 6 suspended by wire suspensions 51 swings due to the reaction of head movement while optical head 3 is moving in coarse access mode, i.e., during acceleration, a low-speed movement or deceleration of optical head 3, objective lens can be held at the position where it was before the track access in coarse access mode.

Since eccentric compensation for optical disk 1 is also executed, even if the rotation position of the optical disk 1 at the time the track access has started differs from the one at the time the access is completed, the laser beam can be directed by objective lens 6 to the vicinity of the target track with high accuracy due to the eccentric compensation.

As described above, eccentric compensation table 24a containing eccentric compensation data for each sector is provided, the position of objective lens 6 before the track access executed in coarse access mode, is memorized, and during access, the memorized position is compared with the present position of objective lens 6 and the lens 6 is moved in accordance with the difference between two positions and the eccentric compensation data. Accordingly, the eccentric compensation operation is started from that portion immediately preceding a position where objective lens 6 is accessed and continues until the access has been completed. By so doing, access is achieved with consideration paid to the eccentric amount of optical disk 1.

Accordingly, the swinging of objective lens 6 in coarse access mode can be suppressed, the accuracy in coarse accessing can be improved as a consequence. At the access terminating time, the relative speed of objective lens 6 to optical disk 3 becomes zero, so that stable tracking can be carried out. In addition, the access time can be shortened.

When the rotation position of the optical disk at the beginning of the coarse access mode differs from the sector at the end of this mode, the proper track access can be executed in accordance with a difference in amount of eccentricity for the individual sectors.

In the above apparatuses, the voltage value corresponding to the position of the objective lens before track access has been executed in coarse access mode is accumulated in the capacitor of the position detector, so that the voltage value in the capacitor is compared with the voltage value corresponding to the position of the objective lens during access to thereby prevent the objective lens from deviating from where it was before the track access. However, this invention is in no way restricted to the above particular case, but may be modified in various manners within the scope and spirit of the invention. For instance, the output of the sensor that corresponds to the position of the objective lens before the track access may be converted into a digital value in the A/D converter, and this digital value may be compared with the digital value corresponding to the position of the objective lens during access, and the difference between the two digital values may be converted into an analog signal based on which the objective lens can be prevented from deviating from where it was before the track access.

## Claims

1. An optical disk apparatus, comprising:
an optical head (3) including converging means (6) for converging a light beam onto an optical disk (1), on which concentric tracks are formed, and further including detecting means (8) for detecting the light beam reflected by the optical disk (1);
first driving means (4) for moving the converging means (6) of the optical head (3) in a direction perpendicular to the axis of the light beam;
second driving means (17a) for moving the optical head (3) in a radial direction of the optical disk (1);
tracking error generating means (OP1), responsive to a detection signal supplied from the detecting means (8), for generating a tracking error signal which represents a tracking error occurring with respect to a given track of the optical disk (1);
following movement-causing means (43), responsive to the tracking error signal, for causing the first driving means (4) to move the converging means (6) to said given track of the optical disk (1);
sensing means (30, 32) for generating a sensing signal corresponding to the position to which the converging means (6) moves;
means (17) for generating a predetermined signal used for biasing the second driving means (17a), said second driving means (17a) being responsive to the predetermined signal and moving the optical head (3) from the given track to a target track, and
first storing means (24a) for storing eccentrictiy data on each of a plurality of areas divided in an circumferential direction of the optical disk (1); characterized by:
second storing means (23, SW1, C) for storing sensing data which is supplied thereto from the sensing means (30, 32) before the optical head (3) is moved from the given track to the target track;
a differential amplifier (A2) for providing a difference between a sensing result output from the sensing means (30, 32) and the sensing result stored in the second storing means (23, SW1, C); and
third driving means (23, SW2; 43, OP1)
(a) for moving the converging means (6) in accordance with the difference provided by the differential amplifier (A2) and also with eccentricity data read out from the first storing means (24a) and corresponding to an area which the optical head (3) faces, thereby moving the converging means (6) from a movement-starting position to a position determined in consideration of the eccentricity,
(b) for stopping the movement of converging means (6) after the optical head (3) is moved from the given track to the target track, and
(c) for starting the movement of the converging means (6) corresponding to the following movement-causing means (43).

2. An optical disk apparatus according to claim 1, characterized in that said converging means (6) includes an objective lens.

3. An optical disk apparatus according to claim 1, characterized in that said detecting means (8) includes a photodetector.

## Patentansprüche

1. Optisches Plattengerät umfassend:
einen optischen Kopf (3), der eine Konvergierungseinrichtung (6) zum Konvergieren eines Lichtstrahls auf eine optische Platte (1) umfaßt, auf welcher konzentrische Spuren ausgeformt sind, und ferner eine Detektionseinrichtung (8) zum Detektieren des Lichtstrahls, der durch die optische Platte (1) reflektiert wird, umfaßt;
eine erste Antriebseinrichtung (4) zum Bewegen der Konvergierungseinrichtung (6) des optischen Kopfs (3) in eine Richtung senkrecht zu der Achse des Lichtstrahls;
eine zweite Antriebseinrichtung (17a) zum Bewegen des optischen Kopfs (3) in eine radiale Richtung der optischen Platte (1);
eine Nachlauffehler-Erzeugungseinrichtung (OP1), welche auf ein Detektionssignal anspricht, welches von der Detektionseinrichtung (8) angelegt wird, zum Generieren eines Nachlauffehlersignals, welches einen Nachlauffehler repräsentiert, der in bezug auf eine gegebene Spur der optischen Platte (1) auftritt;
eine Nachfolge-Bewegungsverursachungseinrichtung (43), welche auf das Nachlauffehlersignal anspricht, um die erste Antriebseinrichtung (4) dazu zu veranlassen, daß sich die Konvergierungseinrichtung (6) zu der gegebenen Spur der optischen Platte (1) bewegt;
eine Sensierungseinrichtung (30, 32) zum Erzeugen eines Sensierungssignals entsprechend der Position, zu welcher sich die Konvergierungseinrichtung (6) bewegt;
eine Einrichtung (17) zum Erzeugen eines vorbestimmten Signals, welches zum Vorspannen der zweiten Antriebseinrichtung (17a) verwendet wird, wobei die zweite Antriebseinrichtung (17a) auf das vorbestimmte Signal anspricht und den optischen Kopf (3) von der gegebenen Spur zu einer Zielspur bewegt, und
eine erste Speichereinrichtung (24a) zum Speichern von Exzentrizitätsdaten von jeder der Vielzahl von Flächen, welche in eine Umfangsrichtung der optischen Platte (1) geteilt sind;
gekennzeichnet durch:
eine zweite Speichereinrichtung (23, SW1, C) zum Speichern der Sensierungsdaten, welche dazu von der Sensierungseinrichtung (30, 32) angelegt werden, bevor der optische Kopf (3) von der gegebenen Spur zu der Zielspur bewegt wird;
einen Differenzverstärker (A2) zum Bereitstellen einer Differenz zwischen einem Sensierungsergebnisausgang der Sensierungseinrichtung (30, 32) und dem Sensierungsergebnis, welches in der zweiten Speichereinrichtung (23, SW1, C) gespeichert ist; und
eine dritte Antriebseinrichtung (23, SW2; 43, OP1)
(a) zum Bewegen der Konvergierungseinrichtung (6) in Übereinstimmung mit der Differenz, die durch den Differenzverstärker (A2) bereitgestellt wird, und ebenso mit Exzentrizitätsdaten, welche von der ersten Speichereinrichtung (24a) ausgelesen werden, und entsprechend einer Fläche, welcher der optische Kopf (3) gegenübersteht, um so die Konvergierungseinrichtung (6) von einer Bewegungsstartposition zu einer Position zu bewegen, die unter Berücksichtigung der Exzentrizität bestimmt wird,
(b) zum Stoppen der Bewegung der Konvergierungseinrichtung (6), nachdem der optische Kopf (3) von der gegebenen Spur zu einer Zielspur bewegt wird, und
(c) zum Starten der Bewegung der Konvergierungseinrichtung (6) entsprechend der Nachfolge-Bewegungsverursachungseinrichtung (43).

2. Optisches Plattengerät nach Anspruch 1, dadurch gekennzeichnet, daß die Konvergierungseinrichtung (6) eine Objektivlinse umfaßt.

3. Optisches Plattengerät nach Anspruch 1, dadurch gekennzeichnet, daß die Detektionseinrichtung (8) einen Photodetektor umfaßt.

## Revendications

1. Dispositif à disque optique comprenant :
- une tête optique (3) comprenant un moyen de focalisation (6) pour faire converger un faisceau lumineux sur un disque optique (1) sur lequel sont formées des pistes concentriques et comprenant, de plus, un moyen de détection (8) pour détecter le faisceau lumineux réfléchi par le disque optique (1);
- un premier moyen d'entraînement (4) pour déplacer le moyen de focalisation (6) de la tête optique (3) dans une direction perpendiculaire à l'axe du faisceau lumineux;
- un second moyen d'entraînement (17a) pour déplacer la tête optique (3) dans une direction radiale du disque optique (1);
- un moyen de génération d'erreur de suivi de piste (OP1) sensible à un signal de détection fourni par le moyen de détection (8) pour la génération d'un signal d'erreur de suivi de piste représentant une erreur de suivi de piste apparaissant par rapport à une piste donnée du disque optique (1);
- un moyen de génération de suivi (43) sensible au signal d'erreur de suivi de piste pour amener le premier moyen d'entraînement (4) à déplacer le moyen de focalisation (6) sur ladite piste donnée du disque optique (1);
- des moyens de détection (30, 32) pour la génération d'un signal de détection correspondant à la position vers laquelle se déplace le moyen de focalisation (6);
- un moyen (17) pour la génération d'un signal prédéterminé utilisé pour polariser le second moyen d'entraînement (17a), ledit second moyen d'entraînement (17a) étant sensible au signal prédéterminé et déplaçant la tête optique (3) de la piste donnée vers une piste cible; et
- un premier moyen de stockage (24a) pour le stockage des données d'excentricité sur chacune d'une pluralité de zones divisées dans une direction circonférencielle du disque optique (1); dispositif caractérisé par :
- un second moyen de stockage (23, SW1, C) pour le stockage des données de détection qui sont fournies par les moyens de détection (30, 32) avant que la tête optique (3) soit déplacée de la piste donnée vers la piste cible;
- un amplificateur différentiel (A2) fournissant une différence entre une sortie de détection fournie par les moyens de détection (30, 32) et le résultat de détection stocké dans le second moyen de stockage (23, SW1, C); et
- un troisième moyen d'entraînement (23, SW2; 43, OP1) pour :
a) déplacer le moyen de focalisation (6) selon la différence fournie par l'amplificateur différentiel (A2) et selon les données d'excentricité extraites du premier moyen de stockage (24a) et correspondant à une zone faisant face à la tête optique (3), déplaçant ainsi le moyen de focalisation (6) d'une position de départ vers une position déterminée selon l'excentricité;
b) arrêter le déplacement du moyen de focalisation (6) après que la tête optique (3) ait été déplacée de la piste donnée sur la piste cible; et
c) démarrer le déplacement du moyen de focalisation (6) correspondant au moyen de suivi (43).

2. Dispositif à disque optique selon la revendication 1, caractérisé en ce que ledit moyen de focalisation (6) comprend un objectif optique.

3. Dispositif à disque optique selon la revendication 1, caractérisé en ce que ledit moyen de détection (8) comprend un photo-capteur.
